# EUROPÄISCHE PATENTSCHRIFT

(11) **EP 3 385 014 B1**
(45) Veröffentlichungstag und Bekanntmachung des Hinweises auf die Patenterteilung: **29.11.2023**
(21) Anmeldenummer: 18165570.5
(22) Anmeldetag: 03.04.2018
(51) Int. Cl.: B23B 27/20, B23B 51/02

(54) **VERFAHREN ZUR HERSTELLUNG EINES BOHRWERKZEUGS FÜR DIE SPANABHEBENDE BEARBEITUNG VON WERKSTÜCKEN SOWIE BOHRWERKZEUG**
DRILLING TOOL AND METHOD FOR MANUFACTURING A DRILLING TOOL FOR THE MACHINING OF WORKPIECES
PROCÉDÉ DE FABRICATION D'UN OUTIL DE PERÇAGE PAR USINAGE PAR ENLÈVEMENT DE COPEAUX DES PIÈCES À USINER AINSI QU'OUTIL DE PERÇAGE

(30) Priorität: 03.04.2017 DE 102017107101
(43) Veröffentlichungstag der Anmeldung: 10.10.2018
(73) Patentinhaber: Jakob Lach GmbH & Co. KG, 63452 Hanau (DE)
(72) Erfinder: LACH, Horst, 63450 Hanau (DE)
(74) Vertreter: Stoffregen, Hans-Herbert

(56) Entgegenhaltungen:
- WO-A1-00/44518
- WO-A1-2010/034410
- US-A1- 2003 063 955

## Beschreibung

Die Erfindung bezieht sich auf ein Verfahren zur Herstellung eines Bohrwerkzeugs für die spanabhebende Bearbeitung von Werkstücken, insbesondere aus Nichteisenmetallen, Kunststoffen oder Kompositwerkstoffen nach dem Oberbegriff des Anspruchs 1.

Ferner bezieht sich die Erfindung auf ein Bohrwerkzeug für die spanabhebende Bearbeitung von Werkstücken, insbesondere aus Nichteisenmetallen, Kunststoffen oder Kompositwerkstoffen, nach dem Oberbegriff des Anspruchs 5.

Ein Verfahren zur Herstellung eines Bohrwerkzeugs sowie ein Bohrwerkzeug der eingangs genannten Art sind aus der WO 2010/034410 A1 bekannt. Das bekannte Bohrwerkzeug weist entlang seiner axialen Erstreckung mindestens drei Bereiche auf, wobei mindestens drei benachbarte Bereiche abwechselnd zähes und hartes Material umfassen. Dabei liegt eine Schichtstruktur vor, bei der eine Schicht aus hartem Material zwischen zwei Schichten aus zähem Material angeordnet ist. Nach dem Stand der Technik ist vorgesehen, dass die verschiedenen Bereiche in einem gemeinsamen Sinterprozess hergestellt werden, wobei dieses Sinterprodukt anschließend mit einem vierten Bereich in geeigneter Weise verbunden, wie verlötet oder verklebt, wird.

Auch wird vorgeschlagen, die Bereiche einzeln herzustellen, und dann in einem zweiten Schritt in geeigneter Weise beispielsweise durch Löten oder Kleben gegebenenfalls mit weiteren Bereichen zu einem Werkzeug zu verbinden.

Die WO 00/44518 A1 bezieht sich auf ein spanbrechendes Werkzeug, wobei ein Spanbrecher bzw. eine Spanleitstufe in ein Spanbrecherteil eingearbeitet und nicht wie üblich unmittelbar in den harten Schneidstoff eingearbeitet ist. Der Spanbrecherteil ist mit dem Schneidenteil, z.B. einem polykristallinen Diamant, fest verbunden und bildet mit einer Auflage eine dreilagige Sandwich-Verbundplatte, welche im Werkezuggrundkörper befestigt wie verlötet ist.

Die US 2003/0063955 A1 betrifft einen Schneideinsatz, der aus einem flachen Komposit-Wafer mit vordefinierter Form und Dicke gebildet ist. Der Wafer umfasst eine Mittenschicht aus ultrahartem Material, welche zwischen zwei Tragschichten oder auf einer Tragschicht aufgesintert ist. Der Wafer umfasst zumindest einen profilierten Spanbrecher, der in Richtung der Schneidkante durch Abtragen der Tragschicht ausgebildet ist.

Ein Verfahren und ein Schneidwerkzeug der eingangs genannten Art sind des Weiteren aus der DE 10 2012 002 547 A1 bekannt. Das Schneidwerkzeug umfasst einen Schneideinsatz mit einer vorgeformten diskreten Schneide, die eine gebogene Schneidenecke des Einsatzes umschließt. Die Schneide umfasst eine obere Lage und eine untere Lage, die aus einem relativ härteren Material als die obere Lage hergestellt ist. In einer Ausführungsform ist die untere Lage aus polykristallinem Diamant (PCD) oder einem polykristallinen kubischen Bornitridmaterial (CBN) hergestellt, während die obere Lage aus Hartmetall hergestellt ist. Der Schneideinsatz kann ferner eine Spankontrollstruktur enthalten, die in der Schneide gebildet ist und mehrere Facetten umfasst, die auf beiden Seiten einer Mittellinie gebildet sind, um eine Spankontrolle während eines Schneidvorgangs zu ermöglichen. Die Spankontrollstruktur kann in einem zweistufigen Prozess gebildet werden, um einen Teil der unteren Lage freizulegen. Die diskrete Schneide kann an den Schneideinsatz angelötet werden, bevor die Spankontrollstruktur geformt wird.

Bei einem Weiteren aus dem Stand der Technik bekannten Verfahren zur Herstellung eines Schneidwerkzeugs wird ein eine Schneidkante aufweisendes Schneidelement, welches aus einer fest mit einer Tragschicht aus Hartmetall verbundenen wie versinterten ultraharten Schicht aus polykristallinem Diamant (PKD) oder polykristallinem Bornitrid (PKBn) gebildet ist mit seiner Tragschicht aus Hartmetall auf einen Grundkörper, der z. B. aus Hartmetall oder Stahl besteht, aufgelötet. Anschließend wird in der ultraharten Schicht die Schneidkante mit Spanfläche z. B. durch Schleifen, ein Laserverfahren oder ein Erodierverfahren ausgebildet.

Das Schneidelement ist beispielsweise aus einem runden, scheibenförmigen, im Handel erhältlichen Rohteil (Ronde) mit der ultraharten PKD- oder PKBn-Schicht und der Tragschicht aus Hartmetall passend ausgeschnitten worden.

Davon ausgehend liegt der vorliegenden Erfindung die Aufgabe zugrunde, ein alternatives Verfahren zur Herstellung von Schneidwerkzeugen sowie ein Schneidwerkzeug der eingangs genannten Art zur Verfügung zu stellen, das bei einfacher Herstellung einen breiten Anwendungsbereich bietet.

Die Aufgabe wird erfindungsgemäß durch die Merkmale des Anspruchs 1 gelöst. Die Hartmetalltragschicht steht über der Stirnfläche des Grundkörpers hervor, wobei aus der Hartmetalltragschicht zumindest abschnittsweise ein über der Stirnfläche vorstehender aktiver Teil in Form zumindest eines Abschnitts der Schneidkante einer Bohrspitze oder Bohrschneide ausgebildet wird.

Die zumindest einen Abschnitt der Schneidkante bildende ultraharte Schicht des Schneidelementes ist unmittelbar mit dem Grundkörper verbunden und die Hartmetalltragschicht erstreckt sich über der Stirnfläche des Grundkörpers und steht zur weiteren Bearbeitung zur Verfügung.

Aus der überstehenden Hartmetalltragschicht wird zumindest abschnittsweise ein über der Stirnfläche vorstehender bzw. überragender aktiver Teil des Schneidelementes, vorzugsweise mittels eines Schleif-, Laser- oder eines Erodierverfahrens ausgebildet. Somit ergeben sich eine Vielzahl von Gestaltungsmöglichkeiten, da der aktive Teil in Form zumindest eines Abschnitts der Schneidkante einer Bohrspitze oder Bohrschneide ausgebildet werden kann.

Durch das erfindungsgemäße Verfahren wird gegenüber dem Stand der Technik ein völlig neuer Weg eingeschlagen. Durch die im Vergleich zum Stand der Technik umgekehrte Anordnung des Schneidelementes ergeben sich sowohl bei der Herstellung als auch bei der Gestaltung des Schneidwerkzeuges bisher ungeahnte Möglichkeiten. Insbesondere steht die über der Stirnseite des Grundkörpers vorstehende Hartmetalltragschicht als aktives Teil und/oder als spanführendes Teil zur Verfügung.

Die ultraharte Schicht des Schneidelementes wird durch ein Lötverfahren, vorzugsweise ein Vakuumlötverfahren, mit dem Grundkörper, der vorzugsweise ein im Vakuum lötbares Material, wie Hartmetall, Sintermetall, Keramik oder Stahl umfasst, verlötet. Anschließend wird die Schneidkante mit angrenzender Spanfläche in einer an die Hartmetalltragschicht angrenzenden Fläche der ultraharten Schicht ausgebildet.

Vorzugsweise wird die Schneidkante mit angrenzender Spanfläche durch Abtragen der Hartmetalltragschicht, vorzugsweise mittels eines Schleif-, Laser- oder Erodierverfahrens, ausgebildet.

Das Schneidelement kann aus einem vorzugsweise runden, scheibenförmigen Rohteil, wie PKD-Ronde, passend ausgeschnitten werden.

Ferner bezieht sich die Erfindung auf ein Bohrwerkzeug nach dem Oberbegriff des Anspruchs 5.

Die Aufgabe wird gemäß der Erfindung durch die Merkmale des Anspruchs 5 gelöst.

Bei einer bevorzugten Ausführungsform ist vorgesehen, dass die ultraharte Schicht mit dem Grundkörper vakuumverlötet ist.

Die Schneidkante der Bohrschneide mit angrenzender Spanfläche ist in einer an die Hartmetalltragschicht angrenzenden Fläche der ultraharten Schicht ausgebildet.

Abschnitte der Schneidkante der Bohrspitze mit angrenzender Spanfläche sind in der Hartmetalltragschicht ausgebildet, wobei die Abschnitte der Schneidkante der Bohrspitze oder Bohrschneide stetig ineinander übergehen.

Die Schneidkanten mit angrenzenden Spanflächen sind durch bereichsweises Abtragen der Hartmetalltragschicht, vorzugsweise durch ein Schleif-, Laser- oder ein Erodierverfahren, in der Hartmetallschicht und/oder der an die Hartmetalltragschicht angrenzenden Fläche der ultraharten Schicht, hergestellt.

Rein beispielhaft und die Erfindung nicht einschränkend ist bei einem Schneidelement für ein Bohrwerkzeug vorgesehen, dass die Hartmetalltragschicht eine Dicke D_{HB} im Bereich von 0,3 mm ≤ D_{HB} ≤ 10 mm, vorzugsweise im Bereich 0,4 mm ≤ D_{HB} ≤ 6,5 mm, insbesondere D_{HB} = 0,75 mm, aufweist und dass die ultraharte Schicht eine Dicke D_{UB} im Bereich von 0,7 mm ≤ D_{UB} ≤ 3,5 mm, vorzugsweise im Bereich von 1,0 mm ≤ D_{UB} ≤ 1,8 mm, insbesondere D_{UB} = 1,5 mm aufweist.

Erfindungsgemäß kann vorgesehen sein, dass bevorzugt, jedoch nicht schutzbereichseinschränkend, ein Dickenverhältnis D_{UB}/D_{HB} zwischen Hartmetallschicht und ultraharten Schicht im Bereich 0,2≤ D_{HB}/D_{UB} ≤ 5,0, vorzugsweise 0,3≤ D_{HB}/D_{UB} ≤ 2,0 liegt.

Rein beispielhaft und die Erfindung nicht einschränkend können die Bohrwerkzeuge einen Durchmesser im Bereich von 2 mm bis 12 mm, vorzugsweise 3 mm bis 10 mm aufweisen.

Weitere Einzelheiten, Vorteile und Merkmale der Erfindung ergeben sich nicht nur aus den Ansprüchen, sondern auch aus der nachfolgenden Beschreibung von den Zeichnungen zu entnehmenden bevorzugten Ausführungsbeispielen.

Es zeigen:
- Fig. 1: eine Seitenansicht eines Grundkörpers mit einem Schneidelement-Rohling zur Herstellung eines nicht erfinderischen Schneidwerkzeugs,
- Fig. 2: einen Abschnitt des Grundkörpers gemäß Fig. 1 mit verlötetem Schneidelement-Rohling,
- Fig. 3: eine Seitenansicht eines nicht erfinderischen Schneidwerkzeugs,
- Fig. 4: eine Einzelheit C aus Fig. 3 in größerem Maßstab und
- Fig. 5: eine Seitenansicht einer Ausführungsform eines Bohrwerkzeugs.

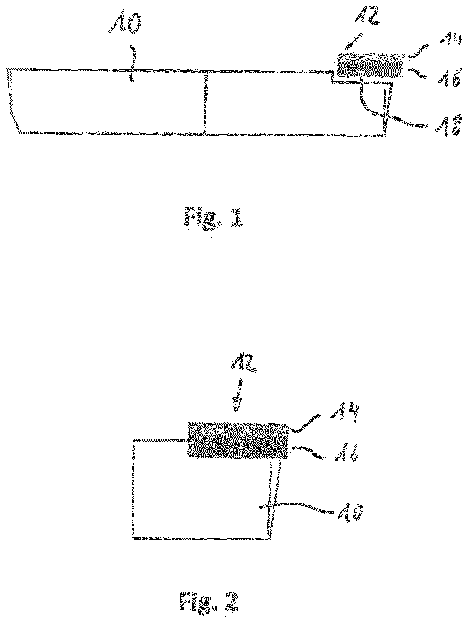

Die Fig. 1 und 2 zeigen allgemein eine Seitenansicht eines Grundkörpers 10 mit einem Schneidelement-Rohling 12 zur Herstellung eines Schneidwerkzeugs. Die Herstellung des Schneidwerkzeugs erfolgt in der Weise, dass zunächst aus einem runden, scheibenförmigen, im Handel erhältlichen Rohteil, wie PKD-Ronde, bestehend aus einer fest mit einer Hartmetalltragschicht 14 verbundenen wie versinterten ultraharten Schicht 16 aus polykristallinem Diamant (PKD) oder polykristallinem Bornitrid (PKBn), der Schneidelement-Rohling 12 passend ausgeschnitten wird. Der Schneidelement-Rohling wird mit seiner ultraharten Schicht 16 in einer Aussparung 18 des Grundkörpers 10 verlötet. Das Lötverfahren erfolgt vorzugsweise unter Vakuum.

Fig. 2 zeigt einen Abschnitt des Grundkörpers 10 mit eingelötetem Schneidelement-Rohling 12.

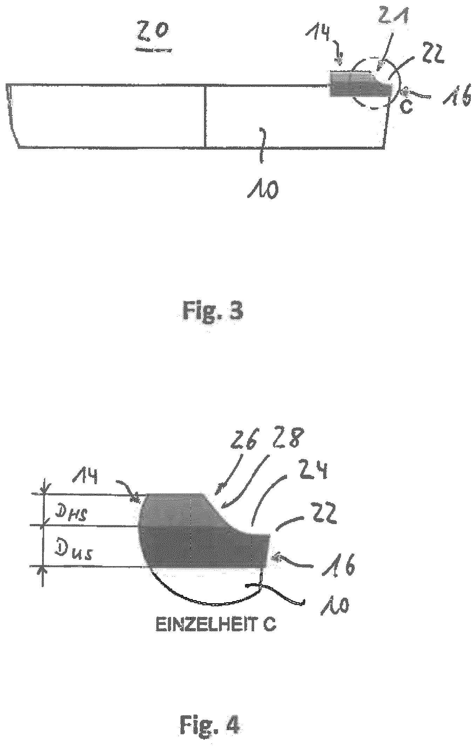

Die Fig. 3 und 4 zeigen rein beispielhaft ein Schneidwerkzeug 20 in Form einer Schneidplatte mit Spanbrecherfunktion.

Nach dem Verlöten wird der Schneidelement-Rohling 12, vorzugsweise mittels eines Schleif-, Laser- oder Erodierverfahrens, zu einem Schneidelement 21 ausgebildet. Die Hartmetalltragschicht 14 wird zumindest bereichsweise abgetragen, um in einer an die Hartmetalltragschicht 14 angrenzenden Fläche eine Schneidkante 22 sowie eine an die Schneidkante 22 angrenzende Spanfläche 24 auszubilden.

In dem dargestellten Ausführungsbeispiel wird die Hartmetalltragschicht 14 zumindest bereichsweise als ein spanführendes Teil 26, wie Spanbrecher, mit einer an die Spanfläche 24 stetig angrenzenden Spanleitfläche 28, vorzugsweise durch ein Schleif-, Laser- oder Erodierverfahren, ausgebildet.

Es kann vorgesehen sein, dass bevorzugt, jedoch nicht schutzbereichseinschränkend, ein Dickenverhältnis zwischen der Hartmetalltragschicht 14 und der ultraharten Schicht 16 im Bereich von 0,2 ≤ D_{HS} / D_{US} ≤ 5,0, vorzugsweise im Bereich von 0,3 ≤ D_{HS} / D_{US} ≤ 1,5, liegt.

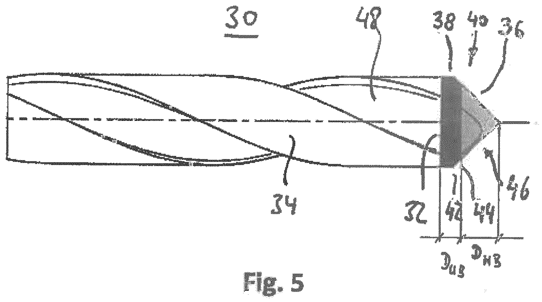

Fig. 5 zeigt in Seitenansicht eine Ausführungsform eines Bohrwerkzeuges 30. Bei dieser Ausführungsform ist auf eine Stirnfläche 32 eines zylinderförmigen, vorzugsweise spiralisierten Grundkörpers 34 ein zylinderförmiger Schneidelement-Rohling aufgelötet. Der Schneidelement-Rohling umfasst eine fest mit einer Hartmetalltragschicht 36 verbundene wie versinterte ultraharte Schicht 38, wie PKD-Schicht oder PKBn-Schicht.

Der Schneidelement-Rohling ist mit seiner ultraharten Schicht 38 mit der Stirnfläche 32 des Grundkörpers 34 verlötet, vorzugsweise vakuumverlötet.

Sodann kann aus dem Schneidelement-Rohling, vorzugsweise mittels eines Schleif-, Laser- oder Erodierverfahrens, ein Schneidelement 40 ausgebildet werden. Durch bereichsweises Abtragen von Material wird aus der ultraharten Schicht 38 ein zylindermantelförmiger Abschnitt ausgebildet, der in einen ersten Abschnitt einer Schneidkante 42 mit Spanfläche 44 einer Bohrerspitze 46 übergeht. Aus der Hartmetalltragschicht 36 wird ein aktiver Teil in Form der Bohrerspitze 46 mit einem zweiten Abschnitt der Schneidkante 42 ausgebildet. Die Abschnitte der Schneidkante 42 gehen stetig ineinander über. Die in der ultraharten Schicht 38 und der Hartmetallschicht 36 ausgebildeten Schneidkanten 42 und Spanflächen 44 gehen in Spannuten 48 über bzw. grenzen an diese an, die in dem Stahl-, Keramik- oder Hartmetall-Grundkörper ausgebildet sind.

## Patentansprüche

1. Verfahren zur Herstellung eines Bohrwerkzeugs (30), insbesondere Dübellochbohrer, für die spanabhebende Bearbeitung von Werkstücken, insbesondere aus Nichteisenmetallen, Kunststoffen oder Kompositwerkstoffen, wobei ein eine Schneidkante (42) bildendes Schneidelement (40), welches aus einer fest mit einer Hartmetallschicht (36) verbundenen, wie versinterten, ultraharten Schicht (38) aus polykristallinem Diamant gebildet ist, fest mit einem Grundkörper (34) verbunden, wie verlötet, wird, wobei ein erster Abschnitt der Schneidkante als aktives Teil in Form einer Bohrschneide in der ultraharten Schicht und ein zweiter Abschnitt der Schneidkante als aktives Teil in Form einer Bohrspitze in der Hartmetallschicht ausgebildet ist,
**dadurch gekennzeichnet,**
**dass** als Schneidelement (40) ein zylinderförmiger Schneidelement-Rohling mit ausschließlich zwei Schichten verwendet wird, nämlich einer Hartmetalltragschicht als Hartmetallschicht (36) und der mit der Hartmetalltragschicht versinterten ultraharten Schicht (38), wobei der Schneidelement-Rohling mit seiner ultraharten Schicht unmittelbar mit einer Stirnfläche des Grundkörpers (34) fest verlötet wird und mit seiner Hartmetalltragschicht über der Stirnfläche hervorsteht,
und **dass** anschließend durch abschnittweises Abtragen der ultraharten Schicht und der Hartmetalltragschicht der erste Abschnitt der Schneidkante mit angrenzender Spanfläche (44) in der ultraharten Schicht und der zweite Abschnitt der Schneidkante mit angrenzender Spanfläche in der Hartmetalltragschicht ausgebildet werden, wobei die Abschnitte der Schneidkante (42) stetig ineinander übergehen.

2. Verfahren nach Anspruch 1,
**dadurch gekennzeichnet,**
**dass** die ultraharte Schicht des Schneidelementes durch ein Vakuumlötverfahren mit dem Grundkörper, der vorzugsweise ein im Vakuum lötbares Material wie Hartmetall, Sintermetall, Keramik oder Stahl umfasst, verlötet wird.

3. Verfahren nach zumindest Anspruch 1 oder 2,
**dadurch gekennzeichnet,**
**dass** das Abtragen der Hartmetalltragschicht oder der ultraharten Schicht mittels eines Schleif-, Laser- oder Erodierverfahrens durchgeführt wird.

4. Verfahren nach zumindest einem der vorhergehenden Ansprüche,
**dadurch gekennzeichnet,**
**dass** der Schneidelement-Rohling aus einem vorzugsweise runden, scheibenförmigen Rohteil, wie PKD-Ronde, passend ausgeschnitten wird.

5. Bohrwerkzeug (30), insbesondere Dübellochbohrer, für die spanabhebende Bearbeitung von Werkstücken, insbesondere aus Nichteisenmetallen, Kunststoffen oder Kompositwerkstoffen, umfassend einen zylinderförmigen, vorzugsweise spiralisierten Grundkörper ( 34), sowie ein mit dem Grundkörper fest verbundenes, wie verlötetes, Schneidelement (40) mit einer Schneidkante (42), wobei das Schneidelement ( 40) aus einer fest mit einer Hartmetallschicht ( 36) verbundenen, wie versinterten, ultraharten Schicht (38) aus polykristallinem Diamant gebildet ist, und wobei ein erster Abschnitt der Schneidkante (42) als aktives Teil in Form einer Bohrschneide in der ultraharten Schicht (38) und ein zweiter Abschnitt der Schneidkante (42) als aktives Teil in Form einer Bohrspitze in der Hartmetallschicht (36) ausgebildet ist,
**dadurch gekennzeichnet,**
**dass** das Schneidelement (40) ein zylinderförmiger Schneidelement-Rohling mit ausschließlich zwei Schichten ist, nämlich einer Hartmetalltragschicht (36) und einer mit der Hartmetalltragschicht versinterten ultraharten Schicht (38) aus polykristallinem Diamant, wobei die die Schneidkante (42) zumindest abschnittsweise bildende ultraharte Schicht (38) des Schneidelementes (40) unmittelbar mit einer Stirnfläche (32) des Grundkörpers (34) verlötet ist und die Hartmetalltragschicht (36) über die Stirnfläche (32) hervorsteht und dass die Abschnitte der Schneidkante (42) mit angrenzender Spanfläche (44) durch bereichsweises Abtragen der ultraharten Schicht (38) und der Hartmetalltragschicht (36) gebildet sind, wobei die Abschnitte der Schneidkante (42) stetig ineinander übergehen.

6. Schneidwerkzeug nach Anspruch 5,
**dadurch gekennzeichnet,**
**dass** die ultraharte Schicht (38) mit dem Grundkörper ( 34) vakuumverlötet ist.

7. Schneidwerkzeug nach zumindest einem der Ansprüche 5 bis 6,
**dadurch gekennzeichnet,**
**dass** die Bohrspitze und/oder die Bohrschneide des Schneidelementes durch ein Schleif-, Laser- oder Erodierverfahren hergestellt ist.

8. Schneidwerkzeug nach zumindest einem der Ansprüche 5 bis 7,
**dadurch gekennzeichnet,**
**dass** ein Dickenverhältnis D_{HB}/D_{SB} zwischen einer Dicke D_{HB} der Hartmetalltragschicht (36) und einer Dicke D_{SB} der ultraharten Schicht (38) im Bereich 0,2 ≤ D_{HB}/D_{UB} ≤ 5,0, vorzugsweise 0,3 ≤ D_{HB}/D_{UB} ≤ 2,0 liegt.

## Claims

1. Method of manufacturing a drilling tool (30), in particular a dowel hole drill, for the chip-removing machining of workpieces, in particular workpieces made of nonferrous metals, plastics or composite materials,
wherein a cutting element (40) forming a cutting edge (42),
which is formed from an ultra-hard layer (38) made of polycrystalline diamond, which is firmly connected, such as sintered, to a hard metal layer (36),
is firmly connected, such as soldered, to a base body (34),
wherein a first section of the cutting edge being formed as an active part in the form of a drilling cutting edge in the ultra-hard layer and a second section of the cutting edge being formed as an active part in the form of a drilling tip in the hard metal layer,
**characterized in**,
**in that** a cylindrical cutting element blank having exclusively two layers, namely a hard metal support layer as the hard metal layer (36) and the ultra-hard layer (38) sintered with the hard metal support layer, is used as the cutting element (40),
wherein the cutting element blank being firmly soldered with its ultra-hard layer directly to an end face of the base body (34) and protruding with its hard metal support layer above the end face, and
**in that** subsequently the first section of the cutting edge with adjacent rake face (44) in the ultra-hard layer and the second section of the cutting edge with adjacent rake face in the hard metal support layer are formed by sectional removal of the ultra-hard layer and the hard metal support layer, wherein the sections of the cutting edge (42) merging continuously into one another.

2. Method according to claim 1,
**characterized in,**
**that** the ultra-hard layer of the cutting element is soldered by a vacuum soldering process to the base body, which preferably comprises a vacuum solderable material such as hard metal, sintered metal, ceramic or steel.

3. Method according to at least claim 1 or 2,
**characterized in,**
**that** the removal of the hard metal support layer or the ultra-hard layer is carried out by means of a grinding, laser or erosion process.

4. Method according to at least one of the preceding claims,
**characterized in,**
**that** the cutting element blank is suitably cut out from a preferably round, disk-shaped blank such as PCD round.

5. Drilling tool (30), in particular dowel hole drill, for the chip-removing machining of workpieces, in particular made of non-ferrous metals, plastics or composite materials, comprising a cylindrical, preferably spiralized base body ( 34), and a cutting element (40) which is firmly connected to the base body, such as soldered, and has a cutting edge (42), wherein the cutting element ( 40) is formed from an ultra-hard layer ( 38) of polycrystalline diamond, which is firmly connected, such sintered, to a hard metal layer ( 36), and wherein a first section of the cutting edge (42) is formed as an active part in the form of a drilling cutting edge in the ultra-hard layer (38) and a second section of the cutting edge (42) is formed as an active part in the form of a drilling tip in the hard metal layer (36),
**characterized in,**
**that** the cutting element (40) is a cylindrical cutting element blank having exclusively two layers, namely a hard metal support layer (36) and an ultra-hard layer (38) of polycrystalline diamond sintered to the hard metal support layer, wherein the ultra-hard layer (38) of the cutting element (40), which forms the cutting edge (42) at least in sections, is directly soldered to an end face (32) of the base body (34) and the hard metal support layer (36) projects beyond the end face (32), and that the sections of the cutting edge (42) with adjacent rake face (44) are formed by removing the ultra-hard layer (38) and the hard metal support layer (36) in zones, the sections of the cutting edge (42) merging continuously into one another.

6. Cutting tool according to claim 5,
**characterized in,**
**that** the ultra-hard layer (38) is vacuum-soldered to the base body (34).

7. Cutting tool according to at least one of claims 5 to 6,
**characterized in,**
**that** the drilling tip and/or the drilling cutting edge of the cutting element is produced by a grinding, laser or eroding process.

8. Cutting tool according to at least one of claims 5 to 7,
**characterized in,**
**that** a thickness ratio DHB/DSB between a thickness DHB of the hard metal support layer (36) and a thickness DSB of the ultra-hard layer (38) is in the range 0.2 ≤ DHB/DUB ≤ 5.0, preferably 0.3 ≤ DHB/DUB ≤ 2.0.

## Revendications

1. Procédé de fabrication d'un outil de perçage (30), en particulier d'une mèche à tourillon, par usinage par enlèvement de copeaux des pièces à usiner, en particulier en métaux non ferreux, en matières plastiques ou en matériaux composites, sachant qu'un élément de coupe (40) formant une arête de coupe (42) et formé d'une couche ultra-dure (38) en diamant polycristallin reliée solidairement à une couche en carbure (36), par exemple par frittage, est relié solidairement à un corps de base (34), par exemple par brasage, sachant qu'une première section de l'arrête de coupe est conçue comme une partie active sous la forme d'une arête de perçage dans la couche ultra-dure et une seconde section de l'arrête de coupe comme partie active sous la forme d'une mèche dans la couche en carbure,
**caractérisé en ce**
**qu'**une ébauche de l'élément de coupe de forme cylindrique avec exclusivement deux couches, à savoir une couche porteuse en carbure comme couche de carbure (36) et la couche ultra-dure (38) frittée avec la couche porteuse en carbure, est utilisée comme élément de découpe (40), sachant que l'ébauche de l'élément de coupe est solidairement brasée avec sa couche ultra-dure directement avec une surface de contact du corps de base (34) et dépasse avec sa couche porteuse en carbure de la surface de contact, qu'ensuite la première section de l'arrête de coupe est conçue par enlèvement par sections de la couche ultra-dure et de la couche porteuse en carbure avec une face de coupe (44) adjacente dans la couche ultra-dure et la seconde section de l'arrête de coupe avec une face de coupe adjacente dans la couche porteuse en carbure, sachant que les sections de l'arrête de coupe (42) se confondent en continu.

2. Procédé selon la revendication 1,
**caractérisé en ce**
**que** la couche ultra-dure de l'élément de coupe est brasée au corps de base comprenant de préférence un matériau brasable sous vide tel qu'un métal dur, un métal fritté, de la céramique ou de l'acier, par un procédé de brasage sous vide.

3. Procédé selon au moins la revendication 1 ou 2,
**caractérisé en ce**
**que** l'enlèvement de la couche porteuse en carbure ou de la couche ultra-dure est effectué au moyen d'un procédé de meulage, de laser ou d'érosion.

4. Procédé selon au moins l'une des précédentes revendications,
**caractérisé en ce**
**que** l'ébauche de l'élément de coupe est découpée sur mesure dans une ébauche de préférence ronde et en forme de disque telle qu'un rond PCD.

5. Outil de perçage (30), en particulier mèche à tourillon, par usinage par enlèvement de copeaux des pièces à usiner, en particulier en métaux non ferreux, en matières plastiques ou en matériaux composites, comprenant un corps de base (34) de forme cylindrique, de préférence spiralé, ainsi qu'un élément de coupe (40) avec une arrête de coupe (42) relié solidairement au corps de base, par exemple par brasage, sachant que l'élément de coupe (40) est formé d'une couche ultra-dure (38) en diamant polycristallin reliée solidairement à une couche en carbure (36), par exemple par frittage, et sachant qu'une première section de l'arrête de coupe (42) est conçue comme partie active sous la forme d'une arête de perçage dans la couche ultra-dure (38) et une seconde section de l'arrête de coupe (42) comme partie active sous la forme d'une mèche dans la douche en carbure (36),
**caractérisé en ce**
**que** l'élément de coupe (40) est une ébauche de l'élément de coupe de forme cylindrique avec exclusivement deux couches, à savoir une couche porteuse en carbure (36) et une couche ultra-dure (38) en diamant polycristallin frittée avec la couche porteuse en carbure, sachant que la couche ultra-dure (38) de l'élément de coupe (40) formant au moins par sections l'arrête de coupe (42) est directement brasée à une surface frontale (32) du corps de base (34) et la couche porteuse en carbure (36) dépasse de la surface frontale (32) et que les sections de l'arrête de coupe (42) avec la face de coupe (44) adjacente sont formées par enlèvement par zones de la couche ultra-dure (38) et de la couche porteuse en carbure (36), sachant que les sections de l'arrête de coupe (42) se confondent en continu.

6. Outils de coupe selon la revendication 5,
**caractérisé en ce**
**que** la couche ultra-dure (38) est brasée sous vide avec le corps de base (34).

7. Outil de coupe selon au moins l'une des revendications 5 à 6,
**caractérisé en ce**
**que** la mèche et/ou l'arête de perçage de l'élément de coupe est générée par un procédé de meulage, de laser ou d'érosion.

8. Outil de coupe selon au moins l'une des revendications 5 à 7,
**caractérisé en ce**
**qu'**un rapport d'épaisseur D_{HB}/D_{SB} entre une épaisseur D_{HB} de la couche porteuse en carbure (36) et une épaisseur D_{SB} de la couche ultra-dure (38) se situe dans la plage 0,2 ≤ D_{HB}/D_{UB} ≤ 5,0, de préférence 0,3 ≤ D_{HB}/D_{UB} ≤ 2,0.
